# EUROPÄISCHE PATENTSCHRIFT

(11) **EP 0 853 209 B1**
(45) Veröffentlichungstag und Bekanntmachung des Hinweises auf die Patenterteilung: **23.07.2003**
(21) Anmeldenummer: 98100287.6
(22) Anmeldetag: 09.01.1998
(51) Int. Cl.: F16L 21/03, F16L 21/035, F16L 21/02

(54) **Abdichtanordnung an Betonfertigteilen**
Seal assembly on precast concrete parts
Dispositif d'étanchéité sur pièces préfabriquées en béton

(30) Priorität: 10.01.1997 DE 29700370 U; 13.02.1997 DE 29702419 U; 15.04.1997 DE 29706793 U
(43) Veröffentlichungstag der Anmeldung: 15.07.1998
(73) Patentinhaber: PT-Poly-Tec GmbH Vertrieb und Herstellung von Dichtungssystemen, 63150 Heusenstamm (DE)
(72) Erfinder: Preisendörfer, Gerhard, D-63150 Heusenstamm (DE)
(74) Vertreter: Blumbach, Kramer & Partner GbR

(56) Entgegenhaltungen:
- EP-A- 0 634 532
- WO-A-94/07074
- DE-A- 3 213 949
- FR-A- 2 701 527
- US-A- 4 299 399
- US-A- 5 143 381

## Beschreibung

Die Erfindung bezieht sich auf eine Abdichtanordnung an Betonfertigteilen, die einen Dichtsitz und eine Abdichtoberfläche aufweisen.

Betonfertigteile weisen als ineinandersteckbare Rohre ein sogenanntes Spitzende und ein Glockenmuffende auf. Bei einer verlegten Rohrleitung sorgen Dichtungen zwischen diesen Spitzenden und Glockenmuffenenden für Abdichtung zwischen dem Leitungsinneren und dem Leitungsäußeren. Die ältere in der Praxis anzutreffende Abdichtungsart bestand darin, einen Rollring auf das Spitzende zu stecken und die Rohre ineinanderzuschieben. Später hat man sogenannte Kompressionsdichtungen verwendet. Solche werden häufig beim Gießen der Glockenmuffe miteingebaut. Diese Kompressionsdichtungen liegen relativ großflächig an der Abdichtoberfläche des Gegen-Rohres an und müssen große Rückstellkräfte entwickeln, um abzudichten. Deshalb erfordert der Zusammenbau der Rohre große Kräfte. Um dem abzuhelfen, werden die Kompressionsdichtungen geschmiert, und es ist auch schon bekannt (EP 0 011 919 B1 = US-A-4 299 399; DE-A
38 17 868), eine Hautfalte an der Dichtung anzuformen oder eine Umhüllung der Dichtung vorzusehen, um Schmiermittel zwischen der Haut bzw. Umhüllung und der Dichtung einzubringen. Beim Zusammenschieben der Rohrenden wird die Haut bzw. Umhüllung von dem einen Rohr mitgenommen und gleitet auf der Dichtung, die am anderen Rohr befestigt ist. Auch ringförmige Kammern mit Schmiermittel sind bekannt (US-A-5 193 381, FR-A-2 701 527), um das beim Zusammenbau auf der Dichtung gleitende Rohr zu schmieren.

Das Herstellungsverfahren von gegossenen Betonrohren sieht vor, die Schalung zu lösen, bevor der Beton völlig abgebunden hat. Solche unvollständig erhärteten ("grüne") Betonfertigteile können sich nach Entschalung verformen und so erhärten, was vor allem am Spitzende zu ovalen Querschnittsformen führt. Wenn derartige formfehlerhafte Rohre zusammengebaut werden, variiert der Querschnitt des Spaltes zwischen Spitzende und Glockenmuffenende von zusammenzubauenden Betonrohren, wenn man entlang des Spaltes wandert, so daß die dazwischengefügte Dichtung entlang ihres Umfangs ungleich zusammengepreßt wird und es sogar vorkommen kann, daß die Dichtung die Abdichtoberfläche an dem gegenüberstehenden Betonfertigteil nicht einmal berührt. Die Bildung einer Leckstelle ist die unausweichliche Folge. Aber auch dann, wenn eine Berührung erfolgt, können sich Leckstellen ausbilden, weil Beton von Hause aus rauh ist und der verminderte Druck bei Formfehlerstellen nicht ausreicht, die Unebenheiten durch Material der Dichtung auszufüllen.

Der Erfindung liegt die Aufgabe zugrunde, Maßnahmen bei Elastomerdichtungen anzugeben, so daß zusammengebaute Betonfertigteile auch dann abgedichtet werden, wenn an ihnen gewisse Formfehler vorkommen.

Die gestellte Aufgabe wird aufgrund der Maßnahmen des Patentanspruchs 1 gelöst und durch die weiteren Merkmale der Unteransprüche ausgestaltet und weiterentwickelt.

Im einzelnen weist die Dichtung einen ringförmigen Kompressionskörper auf, dessen Querschnitt trapezförmig sein kann und der mit einer axialen Seite in eines der Betonfertigteile eingebaut ist. Die zweite Seite des ringförmigen Kompressionskörpers läuft dann schräg radialaxial, um beim Einführen des anderen Betonfertigteils zusammengepreßt zu werden. Erfindungsgemäß wird spätestens bei diesem axialen Zusammenschieben der Betonfertigteile ein Ringwulst aus Abdeckung und gegebenenfalls pastöser Masse gebildet und verformt, um Unebenheiten im Beton und Formfehler der Betonfertigteile im Abdichtungsbereich auszugleichen.

In einer ersten Ausführungsform der Erfindung kann die pastöse Masse in einer geringen Menge angewendet werden, wie sie als Gleitmittel ausreicht. In einem solchen Fall wird die Abdeckung relativ dick und aus einem relativ weichen Material gemacht, so daß sie sich bei der Montage der Fertigteile zu dem Ringwulst zusammenballt, der in Umfangsrichtung gesehen unterschiedlichen Querschnitt einnimmt, wie es der auszufüllenden Lücke entspricht. Die Abdeckung kann aus einem weichen, gummielastischen Material bestehen, das je nach Durchmesser der Betonfertigteile vorzugsweise im Bereich von 5 bis 15 mm dick ist und sich zwischen Beton und dem Kompressionskörper verquetschen läßt.

Bei einer zweiten Ausführungsform der Erfindung wird eine größere Menge pastöse Masse verwendet, die von einem Mantel umhüllt wird, der auch perforiert sein kann. Während die pastöse Masse als Gleitmittel wirksam ist, kann sie auch Abdichtzwecken dienen, indem Substanzen ausgewählt werden, die mit Luft oder Feuchtigkeit reagieren und allmählich fest werden. Auch auf diese Weise werden wechselnd breite Lücken zwischen Kompressionskörper und Abdichtoberfläche des Betonfertigteils ausgefüllt und abgedichtet.

Bei einer dritten Ausführungsform der Erfindung wird eine Hülle zur Bildung des Wulstes in Einschubrichtung vorne am ringförmigen Kompressionskörper angeordnet. Bei der Montage der Betonfertigteile besteht die Tendenz, daß der Wulst in den axialen Zweig hineingezogen wird, und, soweit er dort keinen Platz findet, wird er in den radialen Spalt verdrängt. Dabei werden Ungleichmäßigkeiten dieses radialen Spaltes ausgeglichen, d. h. ungleiche Höhe des radialen Spaltzweiges in Umfangsrichtung ("Parallelitätsfehler") macht sich nicht nachteilig bemerkbar.

Um eine größere Wulstmenge aufnehmen zu können, kann das Betonfertigteil am Übergang zwischen radialem und axialem Zweig des Spaltes zwischen den Betonfertigteilen eine muldenförmige Ausweitung aufweisen. Dadurch wird sichergestellt, daß auch bei extremen Parallelitätsfehlern kein totales Abquetschen des Wulstes benachbart zu dem Kompressionskörper folgen kann. Bei dieser Ausführungsform kann bei nachträglich festgestellter Undichtigkeit pastöse Masse in die Hülle des Wulstes bequem injiziert werden, um diesen von innen her unter Druck zu setzen und auszudehnen und so Undichtigkeitsstellen abzudichten.

Bei einer weiteren Abdichtanordnung ist eine im Muffenende eingebaute Kompressionsdichtung als Primärdichtung und ein separater Ringwulst aus einer schlauchartigen Hülle mit Füllung vorgesehen, die an der vordersten Ringfläche des Spitzendes bzw. der inneren radialen Ringflächen des Muffenendes angebracht ist und eine Sekundärdichtung für den innenliegenden radialen Spalt zwischen Spitzende und Muffenende bildet. Im Vergleich zu dem gummielastischen Kompressionskörper ist der Ringwulst weicher und läßt sich stark verformen, um sich wechselnden Spaltdicken anpassen zu können. Auf diese Weise können Parallelitätsfehler zwischen Muffenende und Spitzende kompensiert werden.

Ausführungsbeispiele werden anhand der Zeichnung beschrieben. Dabei zeigt:
- Fig. 1: einen Querschnitt durch eine erste Ausführungsform der Dichtung,
- Fig. 2: eine Abwandlung zu Fig. 1,
- Fig. 3: eine Darstellung der Betonfertigteile mit Abdichtung,
- Fig. 4: einen Querschnitt durch eine zweite Ausführungsform der Erfindung,
- Fig. 5: eine Abwandlung zu Fig. 4,
- Fig. 6: einen Querschnitt durch den Randbereich von Betonfertigteilen mit einer Dichtung gemäß einer dritten Ausführungsform,
- Fig. 7: eine Variante zu Fig. 6,
- Fig. 8: eine vierte Ausführungsform der Dichtung,
- Fig. 9: eine fünfte Ausführungsform der Dichtung
- Fig.10: eine Prinzipdarstellung weiterer möglicher Ausführungsformen,
- Fig.11: einen Querschnitt durch Betonfertigteile mit einer sechsten Abdichtanordnung, kurz vor dem Zusammenbau,
- Fig.12: eine abgewandelte Einzelheit aus Fig. 11,
- Fig.13: einen Querschnitt einer abgewandelten Ausführungsform und
- Fig.14: einen Querschnitt durch einen Abschnitt einer Gießform mit eingelegten Dichtungen.

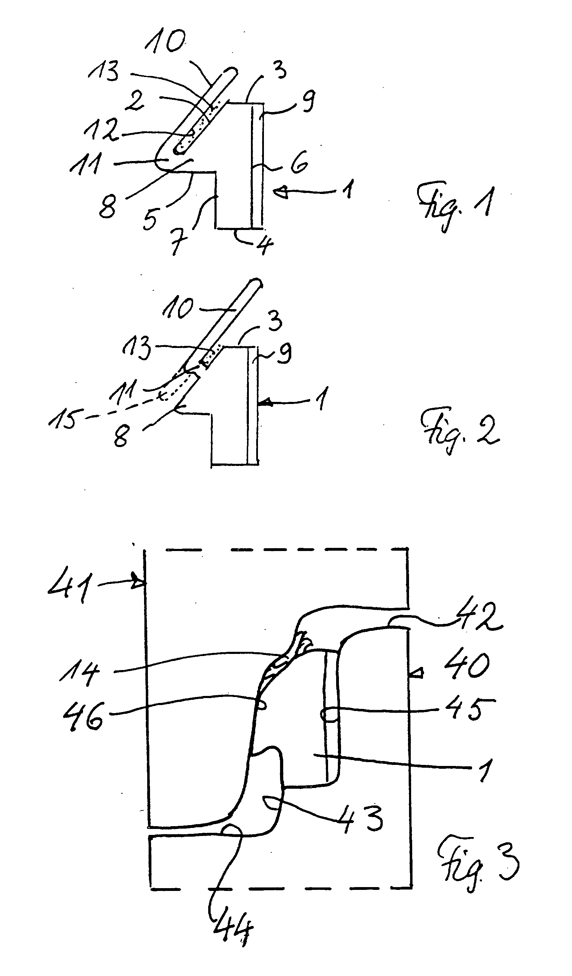

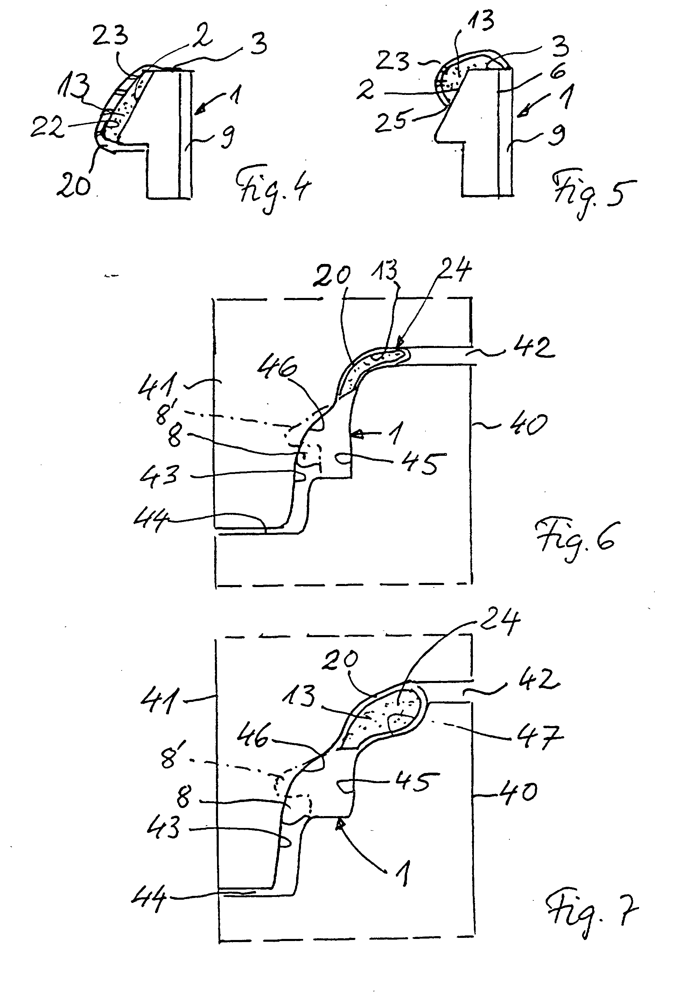

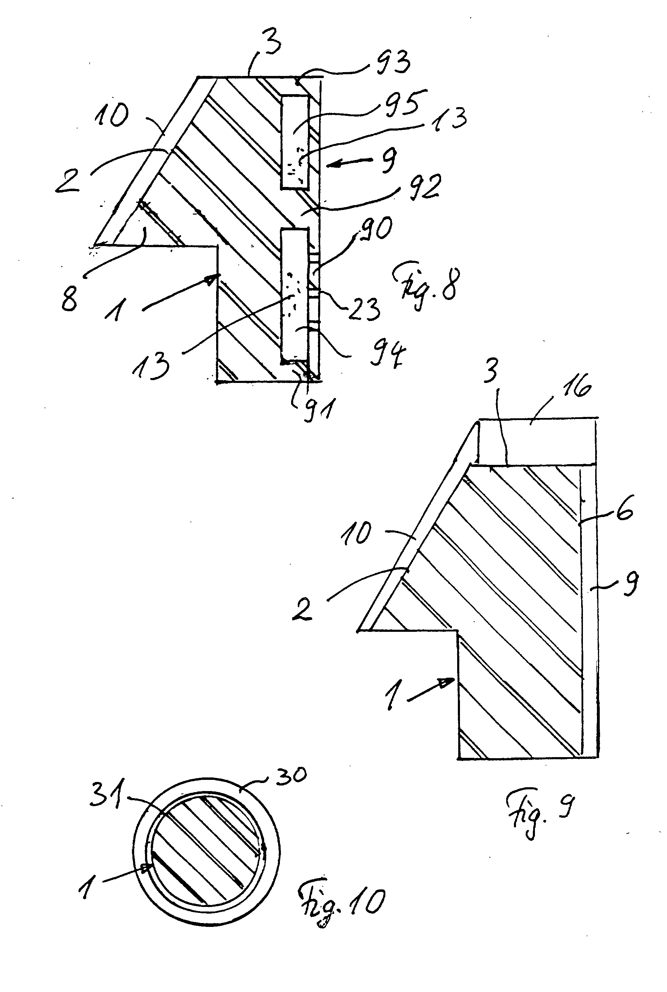

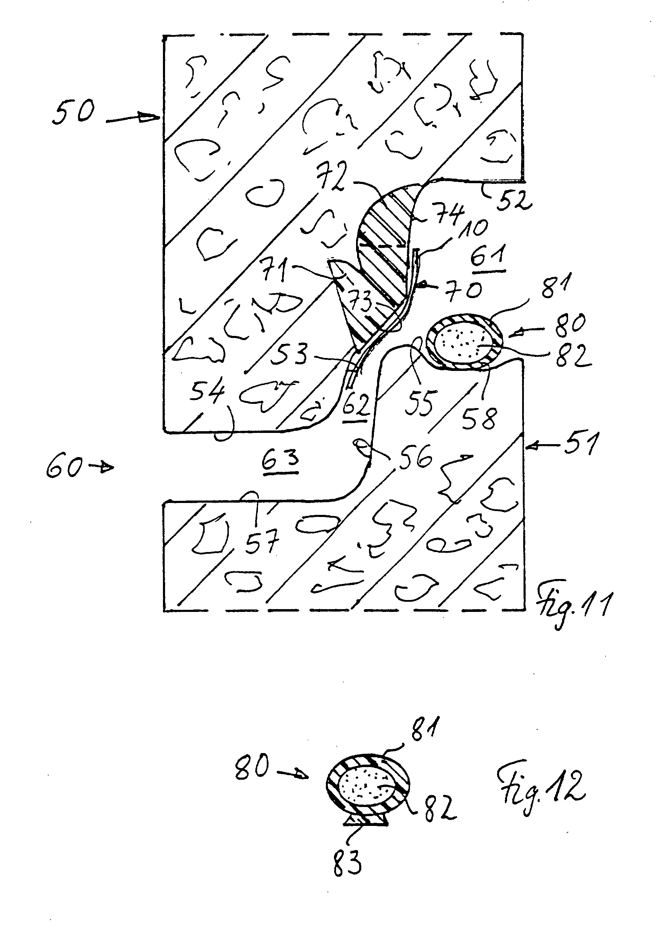

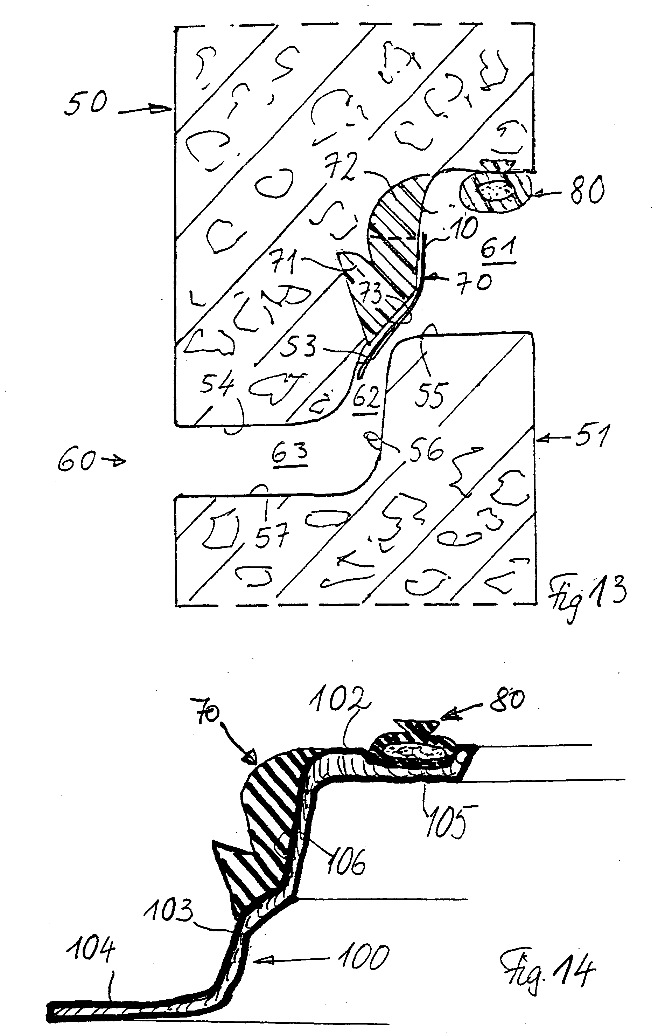

Es wird auf Fig. 1 bis 3 Bezug genommen. Ein ringförmiger Kompressionskörper 1 weist die Umrißform einer verdickten Ziffer 1 auf, d. h. ist aus einem trapezförmigen und einem rechteckförmigen Teil zusammengesetzt. Demgemäß gibt es eine Schrägfläche 2, radiale Flächen 3, 4 und 5 sowie axiale Flächen 6 und 7. Zwischen den Flächen 2 und 5 wird eine Art Dichtlippe 8 gebildet. Die Seite 6 des Kompressionskörpers 1 ist von einer Unterlage 9 bedeckt, während auf der entgegengesetzten Seite 2 eine Abdeckung 10 angebracht ist. Die Abdeckung 10 kann aus einem Elastomer bestehen oder vulkanisierten Gummi enthalten, kann aber auch aus weich-flexiblem Kunststoff, wie PVC oder PE, bestehen. Die Abdeckung 10 ist über einen Steg 11 mit dem Kompressionskörper 1 verbunden. Zwischen der Oberfläche 2 und der Abdeckung 10 erstreckt sich eine Tasche 12, in die eine flüssig-pastöse Masse 13 als Gleitmittel eingefüllt ist. Die Elastomerdichtung weist unterschiedliche Shore-Härten in ihren Teilen 1, 9 und 10 auf. Der Kompressionsteil 1 ist mit einer Shore-Härte im Bereich von 50 ausgestattet, um genügend große Rückstellkräfte beim Zusammenbau der Betonfertigteile zu entwickeln. Die Unterlage 9 kann als Schicht mit einer Shore-Härte im Bereich von 40 ausgebildet sein, um bei den sich entwickelnden Kräften beim Zusammenbau der Betonfertigteile in Rauhigkeiten und Unebenheiten des Betons hinein verdrängt zu werden. Man kann auch Quellgummi (Hydrolite®) verwenden, der bei Feuchtigkeit quillt und die Unebenheiten gut ausfüllt und abdichtet. Schließlich kann auch ein mit Paste gefüllter Mantel verwendet werden, was anhand der Fig. 9 beschrieben wird. Die Unterlage 9 ist zur Zusammenarbeit mit einem Dichtsitz 45 (Fig. 3 und 6) des Betonfertigteils vorgesehen, auf den die Dichtung geschoben wird, bevor der Zusammenbau der Betonfertigteile erfolgt. Der Dichtsitz 45 ist zumeist eine sich axial erstreckende Ringfläche an der Glockenmuffe des Betonfertigteils (in diesem Falle wird ein Dichtring mit Ringachse in der Zeichnung links vom dargestellten Querschnitt der Fig. 3 verwendet), es kommt aber auch vor, daß die Dichtung auf dem Spitzende sitzen soll, woraufhin die Unterlagenschicht 9 für die sich axial erstreckende Ringfläche des Spitzendes ausgebildet ist (in diesem Fall befindet sich die Achse der ringförmigen Dichtung rechts vom Querschnitt der Fig. 6).

Die Abdeckung 10 ist gegenüber den vorbekannten Abdeckhäuten relativ dick und weich. Je nach dem Durchmesser der Betonfertigteile hat die Abdeckung 10 eine Dicke zwischen 3 und 20 mm, vorzugsweise zwischen 5 und 15 mm. Die Shore-Härte liegt im Bereich von 30. Die Abdeckung 10 hält deshalb nicht dem Druck beim Zusammenbau der Betonfertigteile stand, so daß in den hochbelasteten Bereichen praktisch der ringförmige Kompressionskörper 1 mit Teilen seiner Fläche 2 an der Abdichtoberfläche 46 (Fig. 3 und 6) des relativ zum Kompressionskörper verschobenen Betonteils anliegt. Das Material der Abdeckung 10 wird praktisch in Lunkerunebenheiten der Abdichtoberfläche 46 hineingerieben, wenn die Betonfertigteile ineinandergeschoben werden. Bei diesem Vorgang bildet sich auch ein Wulst 14 im keilförmigen Spalt in Einschubrichtung vor der Fläche 2, und Teile der weichen Abdeckung 10 werden bei der Montage der Fertigteile in diesen keilförmigen Spalt hineingezogen, um diesen zu füllen. Wenn dieser keilförmige Spalt in Umfangsrichtung gesehen ungleichförmig breit ist, beispielsweise wegen Formfehlern und insbesondere Ovalitäten der Betonfertigteile, wird durch die Masse des Materials der Abdeckung 10 dafür gesorgt, daß sich der keilförmige Spalt auf jeden Fall füllt, d. h. der gebildete Wulst 14 genügend groß ist, die Abdichtung zu bewirken, auch wenn an dieser Stelle die Rückstellkraft des Kompressionskörpers 1 zu einer solchen Abdichtung nicht ausreichen würde. Bei der Erfindung wird demnach der Umstand ausgenutzt, daß weicheres Material besser abdichtet, während der Nachteil von weichem Material, sich wegdrängen zu lassen und dadurch zu Undichtigkeiten zu führen, dadurch vermieden wird, daß die mit dem weichen Material abgedichteten Stellen einen engen, keilförmigen Querschnitt aufweisen. Die bei Ovalitäten der Betonfertigteile vorkommenden abzudichtenden Bereiche stellen sehr schmale, im Querschnitt mondsichelartige Schlitze dar, so daß die Shore-Härte im Bereich von 30 im allgemeinen ausreicht, genügenden Scherwiderstand zu bieten, wenn der montierte Rohrstrang im Betrieb unter Druck steht.

Fig. 2 zeigt eine Abwandlung zur Ausführungsform der Fig. 1. Die Abdeckung 10 ist verlängert, d. h. reicht um ein größeres Maß über die radiale Fläche 3 hinaus, als es bei Fig. 1 der Fall ist. Zur Bildung des Wulstes 14 (Fig. 3) durch Zusammenballen der Abdeckung 10 steht deshalb mehr Material zur Verfügung, wenn man von gleichen Dicken der Abdeckung 10 ausgeht. Im Falle der Fig. 2 kann man die Abdeckung 10 etwas dünner machen, als zu Fig. 1 angegeben. Die Abdeckung 10 kann sich auch beidseitig des Steges 11 erstrecken, wie bei 15 gezeigt.

Fig. 3 zeigt die Randbereiche von Betonfertigteilen 40, 41 beim Auftreffen auf der Dichtung 1. Der abzudichtende Spalt umfaßt einen radialen Spaltzweig 42 (der außen liegt, wenn 40 die Glockenmuffe und 41 das Spitzende darstellen), einen axialen Spaltzweig 43 (der im wesentlichen von der Dichtung verfüllt wird) und einen weiteren radialen Spaltzweig 44. Als Dichtungssitz 45 wird diejenige radiale Fläche bezeichnet, auf die die Dichtung vor dem Zusammenbau der Betonfertigteile 40, 41 montiert wird, während die Abdichtoberfläche 46 die sich leicht schräg hinziehende Fläche ist, mit der die Schrägfläche 2 der Dichtung abdichten soll und zu der ein Keilwinkel von etwa 5° bis 10° existiert. Infolge dieses Keilwinkels wird das Material der Abdeckung 10 in Richtung auf die Dichtlippe 8 gezogen und durch den hohen örtlich auftretenden Druck in die Unebenheiten der Betonoberfläche gerieben. Überschüssiges Material sammelt sich als Wulst 14 in dem keilförmigen Spalt zwischen Abdichtoberfläche und Schrägfläche 2 der Dichtung 1.

Fig. 4 zeigt eine weitere Ausführungsform der Erfindung, bei der eine schlauchartige Hülle 20 über der Schrägfläche 2 gebildet wird. Die Hülle 20 kann auf der Innenseite oder der Außenseite des ringförmigen Kompressionskörpers 1 angeordnet sein, je nachdem, ob dieser in eine Glockenmuffe oder auf ein Spitzende aufgezogen wird. Die Hülle 20 kann am ringförmigen Kompressionskörper 1 anextrudiert sein, es ist aber auch möglich, ein aufgebrachtes Abdeckband, vorzugsweise aus vulkanisierbarem Kautschuk, in einem separaten Arbeitsgang auf die Seiten 3 und 5 des Kompressionskörpers 1 in geeigneter Weise zu befestigen. Das Innere 22 der Hülle 20 ist mit pastöser Masse 13 gefüllt, die eine Konsistenz als Gleitmittel aufweist. Es gibt Ausführungsformen, in denen die Haut der Hülle 20 unperforiert ist, und solche, in denen Perforationen 23 vorgenommen worden sind. Die Füllung 13 der Hülle 20 richtet sich nach diesen beiden Möglichkeiten.

Bei unperforierter Haut weicht die Füllung 13 dem sich verengenden Spalt beim Schließen der Betonfertigteile 40, 41 aus und bildet einen Wulst vor dem zusammengepreßten Dichtbereich 8 des Kompressionskörpers 1, wobei sich die pastöse Masse auch in Umfangsrichtung der Muffenverbindung der Betonfertigteile bewegt und dabei Unrundheiten der Betonfertigteile ausgleicht.

Bei perforierter Haut ist diese Ausgleichstendenz schwächer ausgebildet, dafür werden aber Lunker in der Betonoberfläche besser ausgefüllt. Hierzu sollte die Masse 13 in Gegenwart von Luft oder Wasser die zusätzliche Tendenz des Verdickens besitzen. Die eingefüllte Menge an pastöser Masse 13 reicht jedenfalls aus, der Struktur ein wulstähnliches Aussehen zu erteilen.

Die Perforationen 23 sollen erst bei auftretendem Druck aufbrechen und das pastöse Mittel 13 nach außen treten lassen. Dadurch wird die Montage von Betonfertigteilen erleichtert. Andererseits wird aber auch das pastöse Mittel innerhalb des Hülleninneren 22 in Richtung der Fläche 3 verdrängt, weil das auf den Kompressionskörper 1 auftreffende Betonfertigteil 41 zunächst in der Nähe der Lippe 8 auftrifft. Somit wird die Hülle 20 im Bereich der Lippe 8 flachgedrückt und zur Fläche 3 hin wulstförmig aufgewölbt. Die Wulstform folgt dem keilförmigen Spalt zwischen der Abdichtoberfläche 46 des Betonfertigteils 41 und der Oberfläche 2 des Kompressionskörpers 1 und macht die Dickenschwankungen des Spaltes mit, wenn solche infolge Formfehler der Betonfertigteile auftreten. Die mit der Zeit steifer werdende pastöse Masse 13 trägt zur zusätzlichen Abdichtung des Spaltes zwischen den Betonfertigteilen bei.

Fig. 5 zeigt eine Variante der Ausführungsform der Fig. 4. Die Hülle 20 ist auf dem ringförmigen Kompressionskörper 1 so angebracht, daß das schlauchförmige Hülleninnere 22 die Seite 3, jedoch nur Teile der Seite 2 bedeckt. Neben vorbereiteten Perforationen 23 kann auch eine Sollrißstelle 25 in der Hülle 20 vorgesehen sein. Diese Ausführungsform soll den radialen Spalt 42 abdichten, was wie folgt erzielt wird:

Bei der Montage der Betonfertigteile trifft die Abdichtoberfläche 46 des relativ zum Kompressionskörper 1 zu verschiebenden Betonfertigteils 41 auf den Bauch der Hülle 20, so daß diese an dieser Stelle plattgedrückt wird und sich die pastöse Masse 13 verschiebt. Gleichzeitig ändert sich der Druck in der pastösen Masse, die Perforationen 23 brechen auf und gegebenenfalls auch die Sollrißstelle 25. Die austretende pastöse Masse wirkt als Gleitmittel für die sich über den Kompressionskörper verschiebende Abdichtoberfläche 46 des Betonfertigteils 41. Gleichzeitig bildet die verdrängte pastöse Masse einen Wulst 24 (Fig. 6) in dem keilförmigen Spalt zwischen Abdichtoberfläche 46 des Betonfertigteils 41 und den Oberflächen 2, 3 des Kompressionskörpers. Der Wulst 24 bildet eine zusätzliche Abdichtung, der insbesondere bei Betonfertigteilen mit Formfehlern wichtig ist. Die pastöse Masse wird mit der Zeit steifer und verschließt den keilförmigen Spalt wie ein Pfropfen.

Fig. 6 zeigt den Zusammenbau der Betonfertigteile mit der Dichtung, bei der die Fläche 3 ähnlich wie die Fläche 2 schräggestellt ist. Die unperforierte Hülle 20 ist am Übergang der Flächen 2 und 3 sowie 3 und 6 mit dem Kompressionskörper 1 verbunden und bildet einen Wulst 24 in Einschubrichtung des Betonfertigteils 41 mit der Abdichtoberfläche 46 vor dem Kompressionskörper 1. In Fig. 6 sind Abschnitte der Betonfertigteile 40 und 41 dargestellt, wobei angenommen werden soll, daß es sich um Schachtbauteile handelt. Teil 40 ist dann Spitzende und Teil 41 Glockenende, zwischen denen der radiale Spalt 42, der axiale Spalt 43 und der weitere radiale Spalt 44 gebildet werden. Die axiale Fläche 45 des Betonfertigteils 40 bildet wiederum den Dichtungssitz, auf dem der Kompressionskörper 1 aufgezogen ist, während die gegenüberliegende Fläche 46 des Betonfertigteils 41 die Abdichtoberfläche bildet, an der die Schrägfläche 2 des Kompressionskörpers dichtend anliegen soll. Wenn dies der Fall ist, zwängt sich die Hülle 20 mit ihrem Inhalt 12 in den radialen Spalt 42 hinein, wobei es auf die Flexibilität und Dehnbarkeit der Hülle 20 ankommt, die aus relativ weichem gummielastischem Material etwa der Shore-Härte 30 besteht. Wenn die Breite des Spaltes 42 in Umfangsrichtung der Betonfertigteile gesehen nicht konstant ist, fließt das Material 13 in Umfangsrichtung und füllt den Spalt 42 gleichmäßig aus, d. h. der Wulst 24 ist im gesamten Spalt 42 präsent und dichtet diesen ab (Sekundärabdichtung). Wenn die Formfehler zu Breitenschwankungen des sich axial erstreckenden Spaltzweiges 43 führen, die zu unzureichender Anpressung des Kompressionskörpers führen, dann wird durch die Reibungskräfte beim Zusammenbau der Betonfertigteile 40, 41 ein Teil der Hülle 20 mit Inhalt 13 in den sich beim Montagevorgang verjüngenden Spalt zwischen der Oberfläche 46 des Betonfertigteils 41 und der Oberfläche 2 des Kompressionskörpers bildenden Spalt hineingezogen und verpreßt, so daß die formfehlerhafte Stelle der Betonfertigteile sicher abgedichtet wird.

Fig. 7 zeigt eine Abwandlung, bei der eine Mulde 47 im Betonfertigteil 40 im Bereich des Spaltes 42 angeordnet ist. Die Mulde 47 ist dafür vorgesehen, die Hülle 20 samt Inhalt 13 aufzunehmen. Wenn sich eine Undichtigkeit bei der Muffenverbindung zeigen sollte, kann man weiteres Material ins Innere der Hülle 20 unter Druck injizieren und dadurch zu einer funktionierenden Sekundärdichtung gelangen.

Die Ausführungsformen nach Fig. 6 und 7 können abgewandelt werden. Wenn im Falle von Rohren als Betonfertigteile die leichte Montage von großem Interesse ist, kann, ähnlich wie in Fig. 1 bis 3 gezeigt, eine Schmiermitteltasche zwischen zwei Gummiflächen gebildet werden, in die werksseitig Gleitmittel eingebracht worden ist.

Ebenfalls zur Erleichterung des Zusammenbaus kann die Hülle 20 vorbereitete Perforationen enthalten, und die flüssig-pastöse Masse kann Gleitmitteleigenschaften aufweisen, so daß Füllung auf die Fläche 2 des Kompressionskörpers austreten kann und der Montagevorgang geschmiert wird.

Wenn die Nachaktivierung der Sekundärdichtung von besonderem Interesse ist, wird als Füllung 13 eine inkompressible und nicht aushärtende Masse verwendet, mit der statische Kräfte übertragen werden können.

Fig. 8 zeigt eine besondere Ausbildung der Unterlage 9. Es ist eine Hülle in Form einer Haut 90 mit Stegen 91, 92, 93 zur Verbindung mit dem Kompressionskörper 1 vorgesehen, wobei ringförmige Räume 94, 95 abgegrenzt werden. Die Räume 94, 95 sind mit flüssig-pastöser Masse 13 gefüllt, und die Haut 90 weist im Bereich des Ringraums 94 aufbrechbare Perforationen 23 auf, die sich bei bestimmten Ausführungsformen auch im Bereich des Ringraums 95 befinden können. Die Schrägfläche 2 des Kompressionskörpers 1 ist mit einer Abdeckung 10 oder einer Hülle 20 versehen, wie sie in den vorhergehenden Ausführungsbeispielen der Fig. 1 bis 7 beschrieben worden sind.

Die Dichtung wird auf das Spitzende eines Betonfertigteils aufgezogen und liegt dann mit der Unterlage 9 an einer Ringfläche dieses Spitzendes an. Beim Zusammenbau der rohrförmigen Betonfertigteile werden das Spitzende und das Muffenende relativ zueinander bewegt, wobei die Abdichtoberfläche 46 (Fig. 3) auf die Abdeckung 10 schräg auftrifft und diese teilweise abschabt, um dabei Lunker und Rauhigkeiten der Betonoberfläche auszufüllen. Wie im Zusammenhang mit Fig. 3 beschrieben, wird sich dabei auch ein Wulst 14 bilden. Die Abstützung der Unterlage 9 am Dichtsitz 45 führt darüber hinaus zu einer großen Druckerhöhung der im Ringraum 95 befindlichen flüssigpastösen Masse 13, so daß sich diese nach dem hydrostatischen Prinzip in Umfangsrichtung des Ringraums 95 umlagert, wenn das Spitzende des Betonfertigteils Formdifferenzen gegenüber der Muffe des anderen Betonfertigteils aufweisen sollte. Es kann so eine gleichmäßige Anpressung des lippenförmigen Abdichtbereichs 8 um den Umfang der Dichtung herum erzielt werden, was einer sicheren Abdichtung sehr förderlich ist.

Beim Zusammenstecken der Betonfertigteile gerät auch der Ringraum 94 unter starken Innendruck, die Perforationen 23 platzen auf, und es tritt Masse 13 aus, welche Lunkerstellen und Rauhigkeiten des Dichtsitzes 45 ausfüllt. Für den Ringraum 94 wird solche Masse 13 bevorzugt, die an Luft oder Wasser steifer wird und somit die Dichtung an ihrem Sitz verklebt.

Die Dichtung der Fig. 8 kann auch als sogenannte integrierte Muffendichtung ausgebildet werden, d. h. mit Verankerungsfortsätzen im Bereich der Stege 91 und 93 sowie gegebenenfalls 92 versehen sein, um beim Gießen des Betonfertigteils in die Muffe mitintegriert zu werden.

Fig. 9 zeigt eine weitere abgewandelte Ausführungsform der Dichtung, die vor allem für Schachtbauwerke geeignet ist. Auf den Oberflächen 2, 3 und 6 des Kompressionskörpers 1 sind Schichten von Quellgummi befestigt, die eine Unterlage 9, eine Abdeckung 10 und eine Sekundärabdichtung 16 bilden. Quellgummi ist im Ausgangszustand etwas spröde, quillt aber bei Zutritt von Feuchtigkeit und sorgt dann für eine gute Abdichtung. Wie bei Fig. 3 besprochen, bildet sich ein Wulst 14 vom Material der Abdeckung 10, wenn die Abdichtoberfläche 46 im geeigneten Winkel zum Schrägungswinkel der Fläche 2 gewählt worden ist. Die Schicht 16 wird in dem radialen Spalt 42 zwischen den Betonfertigteilen eingeklemmt und wirkt dann als Sekundärdichtung. Zu diesem Zweck ist die Schicht 16 etwa 4 bis 10 mm dick, während die Schichten 9 und 10 1 bis 2 mm dick sind.

Fig. 10 zeigt ein Schema der Ummantelung eines Kompressionskörpers 1 durch eine Hülle 30, die um den gesamten Kompressionskörper herumreicht. Der Kompressionskörper 1 ist ringförmig, sein Querschnitt kann die Umrißform einer verdickten Ziffer 1 aufweisen oder auch rund sein, wie dargestellt. An der Hülle 30 gibt es Abschnitte, die sich wie die Abdeckung 10 verhalten, wenn sie mit der geeignet gestalteten Gegenfläche 46 des Betonfertigteils zusammenwirken, und es gibt Abschnitte, die sich wie die Unterlage 9 verhalten. Dies gilt vor allem dann, wenn die Hülle aus Quellgummi besteht, der über eine Zwischenschicht 31 ausreichend fest an dem Kompressionskörper 1 befestigt ist. Auch hier kann man erreichen, daß das Material der Hülle 30 einen Wulst bildet, wenn die Betonfertigteile ineinandergeschoben werden.

Fig. 11 bis 14 zeigen eine weitere Ausführungsform eines Ringwulstes 80 als Sekundärdichtung bei Betonfertigteilen.

Betonrohre und Betonringe für Schachtbauwerke weisen ineinandergreifende Ausbildungen auf, die als Muffenende 50 bzw. Spitzende 51 bezeichnet werden und deren Randbereiche in Fig. 1 und 13 dargestellt sind. Das Muffenende 50 weist eine radial innenliegende Fläche 52, eine sich axial erstreckende Fläche 53 und eine radiale außenliegende Fläche 54 auf. Das Spitzende 51 besitzt eine radial innenliegende Fläche 55, eine axiale Fläche 56 und eine äußere radiale Fläche 57. Wenn Muffenende 50 und Spitzende 51 ineinandergeschoben werden, bildet sich ein gekrümmter Spalt 60 aus, der einen radial inneren Zweig 61, einen axialen Zweig 62 und einen radial äußeren Zweig 63 besitzt.

Zur Abdichtung des Spaltes 60 ist eine Primärdichtung 70 vorgesehen, die mit einem härteren Abschnitt 71 (Shore-Härte 50) und einem weicheren Abschnitt 72 (Shore-Härte 30 oder weniger) in der Fläche 53 der Glockenmuffe 50 verankert ist, indem die Dichtung 70 bei der Herstellung des Betonfertigteils in die Glockenmuffe 50 mit eingegossen worden ist. Die Dichtung 70 besitzt noch zwei zueinander geneigte Seiten 73 und 74, wobei die Seite 73 die Abdichtseite ist und die Seite 74 im Bereich des Abschnittes 72 sehr nachgiebig-weich ist, damit Manövrierraum für das Spitzende 51 gewonnen wird.

Die Abdeckung 10 besteht aus einer relativ weichen, klebfähigen Trägerschicht als pastöser Masse und einer relativ härteren Materialfüllung oder -auflage, nämlich aus feinem Quarzsand, Granulat oder Beflockung mit Kunststoffoder Gummiteilchen, die das Aufspulen des Abdeckbandes ermöglichen. Die Wirkungsweise ist ähnlich wie zuvor beschrieben. Das weiche, klebrige Material der Trägerschicht ermöglicht die Verschiebung und Verteilung auch des relativ härteren Materials in die Lunker und Rauhigkeiten des Betons, so daß dieser ebenmäßiger und geglättet wird und die Dichtwirkung des Kompressionskörpers besser zur Geltung kommt. Bei dem relativ weicheren, klebfähigen Material kann im übrigen im Laufe der Zeit eine Verfestigung eintreten, was der Dichtwirkung zugute kommt.

Als weitere Möglichkeit für die Abdeckung 10 kann ein mit viskosem Gleitmittel getränktes Band verwendet werden, das gegebenenfalls mit Granulat bestäubt ist. Der Kompressionskörper wird mit einem ausreichend breiten Streifen eines solchen Abdeckbandes umwickelt und mit dem Gleitmittel angeheftet. Bei der Montage der Betonrohre kommt es wiederum zum Verdrängen des Gleitmittels und des daran haftenden Granaulats an den Stellen, an denen der Druck besonders hoch ist, während sich solches Material in den Lücken und Fehlstellen des Betons sammelt, diese ausfüllt und stabilisiert.

Das Abdeckband kann so aufbereitet sein, daß man es aufrollen kann. Zum Zwecke des leichteren Abspulens kann man eine Trennfolie zwischenlegen. Ein passendes Stück der Bandrolle wird abgewickelt und um eine Dichtung gelegt. Vor Montage der Betonrohre wird die Abdeckfolie abgezogen.

Die Vorderseite 55 des Spitzendes 51 besitzt eine Mulde 58, in der ein Ringwulst 80 eingelegt ist. Der Ringwulst 80 besteht aus einer ringförmig geschlossenen schlauchartigen Hülle 81 und einer Füllung 82. Die Hülle 81 besteht aus einem gummielastischen oder elastomeren Material mit einer Shore-Härte zwischen 30 und 40, während die Füllung aus einem billigeren Material besteht, beispielsweise pastöse Masse oder mineralisches Korn, wie Sand, feiner Splitt oder dergleichen.

Fig. 12 zeigt eine Abwandlung des Ringwulstes 80, dessen Hülle 81 mit einer Verankerungsrippe 83 versehen ist, um den Ringwulst am vorderen Ende 55 des Spitzendes 51 oder in der Glockenmuffenwand 52 bei der Herstellung des betreffenden Betonfertigteils zu verankern.

Fig. 13 zeigt einen Querschnitt durch die Randbereiche der Glockenmuffe und des Spitzendes, ähnlich wie in Fig. 11, jedoch mit einem Ringwulst 80, der an der radial innenliegenden Fläche 52 des Muffenendes 50 verankert ist. Zu der ersten Ausführungsform entsprechende Teile sind mit korrespondierenden Bezugszeichen belegt und brauchen nicht weiter beschrieben zu werden.

Fig. 14 zeigt einen Querschnitt durch den Randbereich einer sogenannten Untermuffe 100, welche die Gießform zur Abformung der Flächen 52, 53 und 54 der Glockenmuffe darstellt. Demgemäß gibt es eine sich im wesentlichen radial erstreckende Fläche 102, eine sich axial erstreckende Fläche 103 und eine weitere, sich radial erstreckende Fläche 104. In der Fläche 102 ist eine Mulde 105 angebracht, die zur Aufnahme des größten Teils des Ringwulstes 80 dient. In der sich schräg axial erstreckenden Fläche 103 ist eine weitere Mulde 106 angebracht, in welcher die Primärdichtung 70 während des Gießvorgangs aufgenommen wird.

Beim Zusammenbau der Betonfertigteile gelangen die Abdeckung 10 und die Schrägfläche 73 der Dichtung 70 auf die axiale Fläche 56 des Spitzendes, wobei die Dichtung 70 zunehmend zusammengepreßt wird und den Spaltzweig 62 abdichtet. Beim Zusammenbau gelangt auch die Fläche 52 der Glockenmuffe 50 oder die Fläche 55 des Spitzendes 51 auf den Ringwulst 80 und drückt diesen mehr oder weniger "platt", wobei das Maß der Zusammendrückung des Wulstes 80 von der örtlichen Abmessung des Spaltzweiges 61 abhängt, was wiederum von den Herstellungstoleranzen der beteiligten Betonfertigteile abhängt. Wenn der Spaltzweig 61, in Umlaufrichtung gesehen, schmäler wird, wird der Wulst 80 stärker zusammengepreßt, und wenn der Spaltzweig 61 breiter wird, erfolgt eine geringere Zusammenpressung des Wulstes 80. Auf diese Weise werden Druckbelastungsspitzen, die sonst an den Berührungsstellen zwischen den Flächen 52 und 55 vorkommen, abgebaut, d. h. die Druckübertragung zwischen den beiden beteiligten Betonfertigteilen 50 und 51 erfolgt gleichmäßiger. Ein weiterer Vorteil der Anwendung des erfindungsgemäßen Ringwulstes 80 besteht darin, daß eine Sekundärdichtung geschaffen wird, die unabhängig von der Primärdichtung 70 wirksam ist. Diese Sekundärdichtung überträgt zusätzlich axiale Kräfte zwischen den Betonfertigteilen, wenn diese übereinander angeordnet sind, wie dies bei Schachtbauteilen der Fall ist.

## Patentansprüche

1. Abdichtanordnung an Betonfertigteilen, die einen Dichtungssitz und eine Abdichtoberfläche aufweisen, mit folgenden Merkmalen:
ein ringförmiger Kompressionskörper (1), der aus einem ersten gummielastischen Material besteht und eine erste radiale, dem Dichtungssitz (45) zugewandte Seite (6) sowie eine zweite, schräg verlaufende, der Abdichtoberfläche (46) zugewandte Seite (2) aufweist; pastöse Masse (13, 23, 82);
eine Abdeckung oder Hülle (10, 20, 30, 81) für die pastöse Masse, wobei die Abdeckung oder Hülle (10, 20, 30, 81) und die pastöse Masse (13, 23, 82) beim Zusammenbau der Betonfertigteile (40, 41, 50, 51) einen Ringwulst (14, 24, 80) bilden,
wobei
die Anordnung der Abdeckung oder Hülle (10, 20, 30) mit der pastösen Masse (13, 23) in Bezug auf den ringförmigen Kompressionskörper (1) und der mit diesem zusammen arbeitenden Abdichtoberfläche (46, 56) am Betonfertigteil (41, 51) sowie die Dicke und Verformbarkeit des Ringwulstes (14, 24) in radialer Richtung der Teile derart sind, dass Lücken (42, 43;
61, 62) im Abdichtbereich der Betonfertigteile (40, 41, 50, 51) , die, in Umfangsrichtung der Betonfertigteile gesehen, wechselnde Breite aufweisen können, durch den Ringwulst (14, 24) ausgefüllt werden.

2. Abdichtanordnung nach Anspruch 1,
**dadurch gekennzeichnet, dass** die pastöse Masse (13) in Gegenwart von Luft oder Wasser die zusätzliche Tendenz des Verdickens besitzt.

3. Abdichtanordnung nach Anspruce 1 oder 2,
**dadurch gekennzeichnet, daß** die Abdeckung (10) aus Quellgummi besteht, wobei der Quellgummi die pastöse Masse hinsichtlich der Tendenz des Verdickens ersetzt.

4. Abdichtanordnung nach einem der Ansprüche 1 bis 3,
**dadurch gekennzeichnet, daß** die Shore-Härte des ringförmigen Kompressionskörpers (1) im Bereich von etwa 45 bis 55 liegt und die Shore-Härte der Abdeckung oder Hülle (10, 20, 30) im Bereich von etwa 25 bis 35 angesiedelt ist.

5. Abdichtanordnung nach einem der Ansprüche 1 bis 4,
**dadurch gekennzeichnet, daß** die Abdeckung (10) in Abhängigkeit vom Durchmesser des ringförmigen Kompressionskörpers (1) eine Dicke im Bereich von 3 bis 20 mm, vorzugsweise 5 bis 15 mm, aufweist.

6. Abdichtanordnung nach einem der Ansprüche 1 bis 5,
**dadurch gekennzeichnet, daß** die Abdeckung (10) über einen (11) oder mehrere Stege (91, 92, 93) mit dem Kompressionskörper (1) verbunden ist.

7. Abdichtanordnung nach einem der Ansprüche 1 bis 6,
**dadurch gekennzeichnet, daß** die Hülle (20) zusammen mit dem Kompressionskörper (1) einen schlauchartigen Hohlraum (22) umschließt, der mit pastöser Masse gefüllt ist.

8. Abdichtanordnung nach Anspruch 7,
**dadurch gekennzeichnet, daß** die Hülle (20) mit aufbrechbaren Perforationen (23) versehen ist.

9. Abdichtanordnung nach einem der Ansprüche 1 bis 8,
**dadurch gekennzeichnet, daß** die Hülle (20) einen schlauchartigen Fortsatz in Einschubrichtung vorne bildet, der ausgehend vom axialen Spaltzweig (43) sich bis in den radialen Spaltzweig (42) der montierten Betonfertigteile (40, 41) hineinerstreckt.

10. Abdichtanordnung nach einem der Ansprüche 1 bis 9,
**dadurch gekennzeichnet, daß** am ringförmigen Kompressionskörper (1) eine Unterlage (9) angebracht ist, die gegenüber dem Material des Kompressionskörpers aus einem weicheren Material besteht oder Hohlräume (94, 95) aufweist, aus denen flüssig-pastöse Masse (13) austreten kann, um Rauhigkeiten und Unebenheiten des Dichtungssitzes (45) auszugleichen.

11. Abdichtanordnung nach einem der Ansprüche 1 bis 10, mit folgenden Merkmalen:
die Betonfertigteile weisen eine Ausbildung mit Muffenende (50) und Spitzende (51) auf;
ein ringförmiger Kompressionskörper (70) besteht aus einem ersten gummielastischen Material und ist am Muffenende (50) eingebaut oder einbaubar;
mit Muffenende (50) und Spitzende (51) zusammengebaute Betonfertigteile bilden einen inneren radialen Spaltzweig (61), einen axialen Spaltzweig (62) und einen äußeren radialen Spaltzweig (63), wobei der ringförmige Kompressionskörper (70) als Primärdichtung den axialen Spaltzweig (62) abdichtet;
in dem inneren, radialen Spaltzweig (61) ist ein Ringwulst (80) angeordnet, der an der radial innen liegenden Fläche (52, 55) entweder des Muffenendes (50) oder des Spitzendes (51) aufgenommen und gehalten wird; der Ringwulst (80) besteht aus einer schlauchartigen Hülle (81) sowie einem Füllmaterial (82);
nach Zusammenbau von Muffenende (50) und Spitzende (51) der Betonfertigteile wird der Ringwulst in Abhängigkeit von der Weite des inneren, radialen Spaltzweiges (61) mehr oder weniger zusammengepreßt, wodurch die Lastübertragung zwischen Glockenmuffe (50) und Spitzende (51) ausgeglichen und eine Sekundärdichtung geschaffen wird.

12. Abdichtanordnung nach Anspruch 11,
**dadurch gekennzeichnet, daß** die Aufnahme- und Haltemittel des Spitzendes (51) für den Ringwulst (80) aus einer Mulde (58) am Spitzende bestehen.

13. Abdichtanordnung nach Anspruch 11 oder 12,
**dadurch gekennzeichnet, daß** der Ringwulst (80) eine Verankerungsrippe (83) aufweist, mit der der Ringwulst (80) in dem Betonfertigteil an der radial innen liegenden Fläche (52, 55) entweder des Muffenendes (50) oder des Spitzendes befestigt ist.

14. Abdichtanordnung nach einem der Ansprüche 11 bis 13,
**dadurch gekennzeichnet, daß** die schlauchartige Hülle (81) aus gummielastischem Material besteht, welches weicher als das gummielastische Material des ringförmigen Kompressionskörpers (70) ist.

15. Abdichtanordnung nach einem der Ansprüche 1 bis 14,
**dadurch gekennzeichnert**, daß die Abdeckung (10) aus einer relativ weichen, klebfähigen Trägerschicht mit einer Füllung oder Auflage aus relativ härterem Material besteht.

16. Abdichtanordnung nach Anspruch 15,
**dadurch gekennzeichnet, daß** eine abziehbare Abdeckfolie über der Abdeckschicht vorgesehen ist.

17. Abdichtanordnung nach einem der Ansprüche 15 oder 16,
**dadurch gekennzeichnet, daß** die Abdeckschicht auf dünnem, reißfestem Material aufgetragenes, hochviskoses Material enthält.

18. Abdichtanordnung nach einem der Ansprüche 15 bis 17,
**dadurch gekennzeichnet, daß** die Abdeckschicht ein elastisches Ringband mit hochviskoser Trägerschicht beinhaltet und auf eine Ringdichtung aufziehbar ist.

19. Abdichtanordnung nach einem der Ansprüche 15 bis 18,
**dadurch gekennzeichnet, daß** die Abdeckschicht eine zunächst gleitfähige, mit der Zeit bei Umgebungstemperatur jedoch aushärtende Komponente enthält.

## Claims

1. Seal assembly on precast concrete parts that include a sealing seat and a sealing surface, comprising:
an annular compression body (1) consisting of a first rubber-elastic material and having a first radial side (6) facing the sealing seat (45) and a second inclined side (2) facing the sealing surface (46);
a pasty mass (13, 23, 82);
a cover or envelope (10, 20, 30, 81) for the pasty mass,
the cover or envelope (10, 20, 30, 81) and the pasty mass (13, 23, 82) forming an annular bead (14, 24, 80) when assembling the precast concrete parts;
the arrangement of the cover or envelope (10, 20, 30) and of the pasty mass (13, 23) in relation to the annular compression body (1) and the sealed surface (46, 56) at the precast concrete part (41, 51) cooperating therewith as well as the thickness and the deformability of the annular bead (14, 24) in radial direction of the parts being such that gaps (42, 43, 61, 62) in the sealing region of the precast concrete parts (40, 41, 50, 51) which may have changing width, seen in circumferential direction of the precast concrete parts, are filled by the annular bead (14, 24).

2. The seal assembly according to claim 1,
wherein the pasty mass (13), in the presence of air or water, has the additional tendency to thickening.

3. The seal assembly according to claim 1 or 2,
wherein the cover (10) consists of swelling rubber, the swelling rubber replacing the pasty mass in view of the tendency to thickening.

4. The seal assembly according to one of the claims 1 through 3,
wherein the shore hardness of the annular compression body (1) is in the range of approximately 45 to 55 and the shore hardness of the cover or envelope (10, 20, 30) is in the range of approximately 25 to 35.

5. The seal assembly according to one of the claims 1 through 4,
wherein the cover (10), dependent from the diameter of the annular compression body (1), has a thickness in the range of 3 to 20 mm, preferably 5 to 15 mm.

6. The seal assembly according to one of the claims 1 through 5,
wherein the cover (10) is connected to the compression body (1) through one (11) or several webs (91, 92, 93).

7. The seal assembly according to one of the claims 1 through 6,
wherein the envelope (20), together with the compression body (1), encloses a tube-like or hose-like cavity (22) filled with pasty mass.

8. The seal assembly according to claim 7,
wherein the envelope (20) is provided with breakable perforations (23).

9. The seal assembly according to one of the claims 1 through 8,
wherein the envelope (20) forms a hose-like extension ahead in insertion direction, the extension starting from an axial branch (43) of the gap and extending into a radial branch (42) of the gap of the precast concrete parts (40, 41) being assembled.

10. The seal assembly according to one of the claims 1 through 9,
wherein a bed liner (9) is provided at the annular compression body (1) consisting of softer material in relation to the material of the compression body, or having hollows (94, 95) for fluid pasty material (13) which may flow out for levelling roughnesses and unequalnesses of the sealing seat (45).

11. The seal assembly according to one of the claims 1 through 10, wherein
the precast concrete parts have a shape including a bell shaped or socket end (50) and a spigot end (51) ;
an annular compression body (70) consists of a first rubber-elastic material and is inserted, or is insertable at the socket end (50);
precast concrete parts assembled with socket end (50) and spigot end (51) form an inner radial gap branch (61), an axial gap branch (62) and an outer radial gap branch (63), the annual compression body (70) sealing the axial gap branch (62) as a primary seal;
an annular bead (80) arranged in the inner radial gap branch (61) is encompassed and held on the radial inner surface (52, 55) of the socket end (50) or of the spigot end (51) ;
the annular bead (80) consists of a hose-like envelope (81) and a filling material (82);
when the socket end (50) and the spigot end (51) of the precast parts have been assembled, the annular bead is compressed more or less dependent from the width of the inner radial gap branch (61) whereby load transfer between socket end (50) and spigot end (51) is balanced and a secondary seal is provided.

12. The seal assembly according to claim 11,
wherein the means for encompassing and holding the annular bead (80) on the spigot end (51) consists of a depression (58) in the spigot end.

13. The seal assembly according to claim 11 or 12,
wherein the annular bead (80) has an anchoring rib (83) for fixing the annular bead (80) to the precast concrete part at the radial inner face (52, 55) thereof belonging to the socket end (50) or to the spigot end.

14. The seal assembly according to one of the claims
11 through 13, wherein the hose-like envelope (81) consists of rubber-elastic material which is softer than the rubber-elastic material of the annular compression body (70).

15. The seal assembly according to one of the claims 1 through 14,
wherein the cover (10) consists of a relative soft tacky carrier layer having a filling or a liner of relative harder material.

16. The seal assembly according to claim 15,
wherein an pull-off covering foil is provided over the covering liner.

17. The seal assembly according to one of the claims 15 or 16,
wherein the covering liner contains high viscous material applied on thin tear-resistant material.

18. The seal assembly according to one of the claims 15 through 17,
wherein the covering liner includes an elastic annular strip having a high viscous carrier layer and is adapted to be drawn onto an annular seal.

19. The seal assembly according to one of the claims 15 through 18,
wherein the covering liner contains a component which initially is sliding, however with time and under ambient temperature hardens.

## Revendications

1. Système d'étanchéité sur des éléments préfabriqués en béton, présentant un logement de garniture d'étanchéité et une surface d'étanchéité, avec les caractéristiques suivantes :
un corps de compression annulaire (1) qui est constitué en un premier matériau ayant l'élasticité du caoutchouc et comprend une première face (6) radiale en regard du logement de garniture d'étanchéité (45) ainsi qu'une deuxième face (2) inclinée en regard de la surface d'étanchéité (46) ;
une masse pâteuse (13, 23, 82) ;
une couverture ou une enveloppe (10, 20, 30, 81) pour la masse pâteuse, la couverture ou l'enveloppe (10, 20, 30, 81) et la masse pâteuse (13, 23, 82) formant un boudin annulaire (14, 24, 80) lors de l'assemblage des éléments préfabriqués en béton (40, 41, 50, 51),
la disposition de la couverture ou de l'enveloppe (10, 20, 30) avec la masse pâteuse (13, 23) par rapport au corps de compression annulaire (1) et de la surface d'étanchéité (46, 56) coopérant avec celui-ci sur l'élément préfabriqué en béton (41, 51), ainsi que l'épaisseur et la déformabilité du boudin annulaire (14, 24) dans le sens radial des éléments étant telle que des espaces (42, 43 ; 61, 62) dans la zone d'étanchéité des éléments préfabriqués en béton (40, 41, 50, 51) qui, dans le sens circonférentiel des éléments préfabriqués en béton, peuvent présenter des largeurs variables, sont remplis par le boudin annulaire (14, 24).

2. Système d'étanchéité selon la revendication 1, **caractérisé en ce qu'**en présence d'air ou d'eau la masse pâteuse (13) présente la tendance supplémentaire à s'épaissir.

3. Système d'étanchéité selon la revendication 1 ou 2, **caractérisé en ce que** la couverture (10) est en caoutchouc gonflant, le caoutchouc gonflant remplaçant la masse pâteuse concernant la tendance à l'épaississement.

4. Système d'étanchéité selon l'une quelconque des revendications 1 à 3, **caractérisé en ce que** la dureté Shore du corps de compression annulaire (1) est de l'ordre d'environ 45 à 55 et **en ce que** la dureté Shore de la couverture ou de l'enveloppe (10, 20, 30) est de l'ordre d'environ 25 à 35.

5. Système d'étanchéité selon l'une quelconque des revendications 1 à 4, **caractérisé en ce qu'**en fonction du diamètre du corps de compression annulaire (1), la couverture (10) présente une épaisseur de l'ordre de 3 à 20 mm, de préférence de 5 à 15 mm.

6. Système d'étanchéité selon l'une quelconque des revendications 1 à 5, **caractérisé en ce que** la couverture (10) est reliée au corps de compression (1) par un (11) ou plusieurs ponts (91, 92, 93).

7. Système d'étanchéité selon l'une quelconque des revendications 1 à 6, **caractérisé en ce que** l'enveloppe (20), conjointement avec le corps de compression (1), enferme un espace creux (22) tubulaire, qui est rempli de masse pâteuse.

8. Système d'étanchéité selon la revendication 7, **caractérisé en ce que** l'enveloppe (20) est munie de perforations (23) pouvant être défoncées.

9. Système d'étanchéité selon l'une quelconque des revendications 1 à 8, **caractérisé en ce que** l'enveloppe (20) forme un prolongement tubulaire à l'avant dans le sens d'introduction, qui s'étend depuis la branche de séparation axiale (43) jusque dans la branche de séparation radiale (42) des éléments préfabriqués en béton (40, 41) montés.

10. Système d'étanchéité selon l'une quelconque des revendications 1 à 9, **caractérisé en ce que** le corps de compression annulaire (1) est pourvu d'une sous-couche (9) réalisée en un matériau plus souple que le matériau du corps de compression, ou qui présente des espaces creux (94, 95) desquels peut sortir une masse pâteuse-liquide (13) pour compenser des rugosités ou des -inégalités du logement de la garniture d'étanchéité (45).

11. Système d'étanchéité selon quelconque l'une des revendications 1 à 10, avec les caractéristiques suivantes :
les éléments préfabriqués en béton présentent une extrémité femelle (50) et une extrémité mâle (51) ;
un corps de compression annulaire (70) formé en un premier matériau ayant l'élasticité du caoutchouc et qui est ou peut être installé au niveau de l'extrémité femelle (50) ;
des éléments préfabriqués en béton assemblés par leurs extrémités femelle (50) et mâle (51) forment une branche de séparation radiale intérieure (61), une branche de séparation axiale (62) et une branche de séparation radiale extérieure (63), le corps de compression annulaire (70), en tant que garniture d'étanchéité primaire, rendant étanche la branche de séparation axiale (62) ;
dans la branche de séparation radiale intérieure (61) un boudin annulaire (80) est disposé, qui est logé et maintenu sur la surface radiale intérieure (52, 55) soit de l'extrémité femelle (50) soit de l'extrémité mâle (51) ;
le boudin annulaire (80) comprend une enveloppe tubulaire (81) et un matériau de remplissage (82) ;
après l'assemblage de l'extrémité femelle (50) et de l'extrémité mâle (51) des éléments préfabriqués en béton, le boudin annulaire est plus ou moins comprimé en fonction de la largeur de la branche de séparation radiale intérieure (61), ce qui compense le transfert de charge entre l'extrémité femelle (50) et l'extrémité mâle (51) pour ainsi obtenir une garniture d'étanchéité-secondaire.

12. Système d'étanchéité selon la revendication 11, **caractérisé en ce que** les moyens de logement et de support de l'extrémité mâle (51) pour le boudin annulaire (80) consistent en un creux (58) dans l'extrémité mâle.

13. Système d'étanchéité selon la revendication 11 ou 12, **caractérisé en ce que** le boudin annulaire (80) présente une nervure d'ancrage (83) par laquelle le boudin annulaire (80) est fixé dans l'élément préfabriqué en béton sur la surface radiale intérieure (52, 55) soit de l'extrémité femelle (50), soit de l'extrémité mâle.

14. Système d'étanchéité selon l'une quelconque des revendications 11 à 13, **caractérisé en ce que** l'enveloppe tubulaire (81) est en gomme élastique qui est plus souple que la gomme élastique du corps de compression annulaire (70).

15. Système d'étanchéité selon l'une quelconque des revendications 1 à 14, **caractérisé en ce que** la couverture (10) consiste en une couche de support relativement souple et adhésive comprenant une charge ou une couche d'un matériau relativement plus dur.

16. Système d'étanchéité selon la revendication 15, **caractérisé en ce qu'**un film de couverture détachable est prévu au-dessus de la couche de couverture.

17. Système d'étanchéité selon l'une quelconque des revendications 15 ou 16, **caractérisé en ce que** la couche de couverture contient un matériau à haute viscosité appliqué sur un matériau résistant à la déchirure.

18. Système d'étanchéité selon l'une quelconque des revendications 15 à 17, **caractérisé en ce que** la couche de couverture contient une bande annulaire élastique pourvue d'une couche de support à haute viscosité et qu'elle peut être tendue sur une garniture d'étanchéité annulaire.

19. Système d'étanchéité selon l'une quelconque des revendications 15 à 18, **caractérisé en ce que** la couche de couverture contient un composant d'abord glissant mais se durcissant dans le temps à la température ambiante.
